(19) Europäisches Patentamt
European Patent Office
Office européen des brevets

(11) Numéro de publication : **0 047 191**
**B1**

(12) # FASCICULE DE BREVET EUROPÉEN

(45) Date de publication du fascicule du brevet : **11.04.84**

(51) Int. Cl.$^3$ : **C 01 B 21/40**, B 01 D 53/34

(21) Numéro de dépôt : **81401045.0**

(22) Date de dépôt : **30.06.81**

(54) **Procédé de traitement d'un courant gazeux contenant des oxydes d'azote et de l'oxygène.**

(30) Priorité : **11.07.80 FR 8015461**

(43) Date de publication de la demande : **10.03.82 Bulletin 82/10**

(45) Mention de la délivrance du brevet : **11.04.84 Bulletin 84/15**

(84) Etats contractants désignés : **AT BE DE FR GB IT NL SE**

(56) Documents cités :
**FR-A- 1 255 373**
**FR-A- 2 016 722**
**FR-A- 2 088 646**
**FR-A- 2 221 173**
**US-A- 4 081 517**

(73) Titulaire : **RHONE-POULENC CHIMIE DE BASE**
**25, quai Paul Doumer**
**F-92408 Courbevoie (FR)**

(72) Inventeur : **Botton, Roger**
**32, rue Garibaldi**
**F-69006 Lyon (FR)**
Inventeur : **Cosserat, Dominique**
**21, rue Joseph Chantemille**
**F-03100 Montluçon (FR)**

(74) Mandataire : **Martin, Henri et al**
**RHONE-POULENC RECHERCHES Service Brevets Chimie et Polymères 25, quai Paul Doumer**
**F-92408 Courbevoie Cedex (FR)**

**EP 0 047 191 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

Procédé de traitement d'un courant gazeux contenant des oxydes d'azote et de l'oxygène

La présente invention concerne un procédé perfectionné de traitement d'un courant gazeux contenant des oxydes d'azote et de l'oxygène ; elle concerne plus particulièrement la séparation des oxydes d'azote du courant gazeux les contenant et l'application de ce procédé à l'épuration des gaz résiduaires.

On connaît depuis longtemps la synthèse de l'acide nitrique par oxydation de l'ammoniac au moyen d'oxygène. La première réaction mise en œuvre à température élevée fournit le monooxyde d'azote NO, lequel est ensuite oxydé par l'oxygène à température plus faible pour fournir le bioxyde d'azote $NO_2$, qui à son tour subit avec l'eau une réaction de dismutation fournissant l'acide nitrique et du monooxyde d'azote, dans des colonnes d'oxydo-absorption. Le monooxyde d'azote est à son tour réoxydé par l'oxygène restant et le processus se poursuit par dismutation.

Un atelier conventionnel de fabrication d'acide nitrique comprend habituellement deux ou de préférence trois colonnes d'absorption. Dans les deuxième et troisième colonnes, cependant, la pression partielle d'oxygène et les pressions partielles des oxydes d'azote (NO et $NO_2$) dans le courant gazeux sont telles que le processus d'oxydation et d'absorption se ralentit à un point tel qu'il faudrait augmenter considérablement le nombre des plateaux de la colonne pour éliminer les oxydes d'azote non transformés en acide nitrique qui sont présents dans le courant gazeux résiduaire. C'est pourquoi, afin d'éviter des investissements trop onéreux, les gaz résiduaires sont rejetés à l'atmosphère avec des quantités sensibles d'oxydes d'azote comprises par exemple entre 1 000 et 2 000 vpm (volumes par millions). Ces rejets présentent deux inconvénients notables : d'une part ils représentent une perte de production que l'on peut évaluer à environ 1 % ou plus, et d'autre part, ils provoquent un sérieux problème de pollution de l'environnement. A cet égard les différentes législations nationales récemment publiées exigent que les gaz résiduaires contiennent des valeurs notablement plus faibles en oxydes d'azote ($NO_x$). C'est ainsi que la norme française exige moins de 400 vpm et la norme des EUA moins de 255 vpm.

C'est pourquoi de nombreux procédés ont été proposés pour réduire à des valeurs admissibles la teneur en $NO_x$ du courant gazeux résiduaire. Certains de ces procédés font utilisation d'une réaction destructive des oxydes d'azote par l'ammoniac, le cas échéant en présence d'un catalyseur approprié, ce par quoi l'on réduit les oxydes d'azote en azote. Ces procédés consomment une quantité substantielle d'ammoniac. D'autres procédés font appel à une absorption des oxydes d'azote dans une solution appropriée, comme par exemple une solution aqueuse de base ou une suspension d'hydroxyde de calcium pour donner des nitrites, lesquels sont des sous-produits difficiles à valoriser (voir brevet US-A-3.034.853). D'autres procédés enfin font appel à une oxydation complémentaire des oxydes d'azote contenus dans le courant gazeux au moyen d'un agent oxydant, le cas échéant en présence d'un catalyseur solide, et l'absorption du gaz oxydé par une solution aqueuse sous forme d'acide nitrique ce par quoi l'on recueille une solution d'acide nitrique concentrée à plus de 70 % (voir brevet US-A-4.081.517).

Il est également connu d'absorber les oxydes d'azote d'un courant gazeux au moyen d'une solution aqueuse d'acide nitrique dilué ce par quoi l'on obtient une solution d'acide nitreux dans ladite solution et un courant gazeux épuré en $NO_x$. Ensuite on régénère la solution de mise en contact par la réaction inverse de l'absorption en modifiant la température et la pression ou en oxydant $HNO_2$ par l'oxygène dans un dispositif séparé.

Pour des teneurs faibles en $NO_x$ (inférieures à 2 500 vpm) correspondant à celles d'un gaz résiduaire d'un atelier nitrique, la réaction équilibrée :

$$NO + NO_2 + H_2O \rightleftarrows 2\,HNO_2$$

détermine l'obtention d'une concentration faible en $HNO_2$, dans la solution. Cette concentration est toujours faible, en général inférieure à $5.10^{-2}$ mole/litre, et elle présente un maximum lorsque la concentration en $HNO_3$ de la solution d'absorption est inférieure à 5 N. C'est pourquoi le procédé mentionné ci-dessus d'élimination par absorption des $NO_x$ d'un gaz résiduaire sortant des tours d'oxydo-absorption nécessite des appareils de contact de dimensions conséquentes.

Par ailleurs, dans la pratique industrielle, dans le cas d'utilisation de colonnes d'oxydo-absorption à plateaux, le principe de calcul de ces colonnes, pour préparer l'acide nitrique, repose essentiellement sur la connaissance des deux réactions suivantes :

$$NO + 1/2\,O_2 \rightleftarrows NO_2 \quad (1)$$

$$3\,NO_2 + H_2O \rightleftarrows 2\,HNO_3 + NO \quad (2)$$

comme il a déjà été rappelé ci-dessus. Il en résulte une conception de colonnes caractérisées par les éléments suivants :

— le nombre de plateaux de colonnes est élevé, en général supérieur à 20 au total,

— la distance entre les plateaux est relativement importante (de l'ordre de 0,7 à 1 mètre), et

— la hauteur de l'émulsion gaz-liquide formée sur chaque plateau est relativement faible — de l'ordre de 0,1 mètre environ — afin de favoriser la réaction lente de l'oxydation de NO en $NO_2$ en phase gaz. De la sorte, le rapport R du volume de colonne compris entre deux plateaux successifs au volume occupé par l'émulsion gaz-liquide entre ces plateaux successifs est habituellement supérieur à 7, de préférence voisin 9.

L'art antérieur enseigne également qu'il y a lieu pour augmenter l'efficacité de l'oxydo-absorption des $NO_x$, de diminuer la distance entre les premiers plateaux et en conséquence d'augmenter la distance entre les derniers, à nombre de plateaux, volume d'oxydo-absorption, hauteur de liquide constants, comme enseigné dans le brevet français 1.255.373. Ce faisant, selon ce brevet, sur une installation à 23 plateaux, on aboutit au mieux à une diminution de la teneur en $NO_x$ du gaz résiduaire, toutes choses égales par ailleurs, de 2 400 à 1 200 vpm à la pression habituelle (de l'ordre de $4.10^5$ Pa).

Plus généralement dans l'art antérieur, pour une teneur en $NO_x$ des gaz inférieure à 6 000 vpm de préférence inférieure à 2 500 vpm, le rapport K du volume de rétention de liquide en $m^3$ dans la partie correspondante du dispositif de contact gaz-liquide au débit en $Nm^3/h$ de gaz traité est inférieur à $3,5.10^{-4}$ heure, de préférence voisin de $2,5.10^{-4}$ heure.

La demanderesse a étudié sur une unité industrielle telle que conçue ci-dessus (R = 9) et comportant 50 plateaux d'oxydo-absorption, l'évolution des pressions partielles des oxydes d'azote au-dessus de chaque plateau et elle est arrivée aux conclusions suivantes :

1. Au fur et à mesure que l'on progresse le long des colonnes, l'absorption devient de moins en moins efficace.

2. La différence $(1/P_n) - (1/P_{n-1})$

en fonction du numéro du plateau, différence dans laquelle $P_{n-1}$ représente la pression partielle des $NO_x$ dans le gaz entrant sur le plateau de rang n et $P_n$ la pression partielle des $NO_x$ du gaz sortant du plateau de rang n, devient sensiblement constante à partir du plateau de rang 20 de ladite unité industrielle, plateau au sortir duquel la teneur en $NO_x$ du gaz est inférieure à 6 000 vpm et où l'on opère en présence d'acide nitrique dilué à contre-courant du gaz.

Ceci suggère qu'il existe un phénomène global du deuxième ordre par rapport à la pression partielle des $NO_x$ contenus dans le gaz et remet en cause le principe même de l'élaboration des colonnes pour une teneur faible en $NO_x$. Par conséquent, sans vouloir se relier à une théorie, lorsque la pression partielle des $NO_x$ dans le gaz est faible (teneur inférieure à 6 000 vpm) le phénomène global d'oxydo-absorption dans les solutions diluées d'acide nitrique est limité par une réaction en phase liquide. Dans ces solutions, la forme soluble des $NO_x$ étant $HNO_2$, il semble que ce soit l'évolution de $HNO_2$ en $HNO_3$ qui soit le phénomène limitant le débit global de gaz transformé et non, comme admis jusqu'à présent, la réaction en phase gaz de l'oxydation de NO en $NO_2$. Ces constatations vont donc à l'encontre des hypothèses admises qui conditionnent la conception des colonnes d'oxydo-absorption. Il y a donc lieu, en conséquence, pour améliorer l'efficacité globale des colonnes d'oxydo-absorption, et plus généralement d'un dispositif d'oxydo-absorption à contre-courant, pour une teneur faible en $NO_x$ du gaz, de favoriser la disparition en phase liquide de $HNO_2$ par sa transformation en $HNO_3$.

Selon l'invention, on parvient à ce résultat d'augmentation du rendement d'oxydo-absorption, dans un dispositif de contact gaz-liquide à contre-courant, des $NO_x$ contenus dans un gaz à une teneur inférieure à 6 000 vpm, de préférence inférieure à 2 500 vpm, conjointement à l'oxygène, par contact à contre-courant avec une solution aqueuse d'acide nitrique dilué, en améliorant l'évolution des espèces en phase liquide, c'est-à-dire en augmentant le temps de séjour de la phase liquide dans la partie correspondante de l'unité de contact, à une valeur telle que le rapport K du volume de rétention liquide (en $m^3$) dans ladite partie de l'appareil, au débit (en $Nm^3/h$) de gaz soit supérieur à $5.10^{-4}$ heure pour une teneur inférieure à 6 000 vpm et supérieure à $3,5.10^{-4}$ heure pour une teneur inférieure à 2 500 vpm. Dans le cas particulier d'une unité d'oxydo-absorption constituée d'un ensemble de colonnes à plateaux, ceci veut dire que l'on augmente la hauteur de l'émulsion gaz-liquide sur tout ou partie de l'ensemble des plateaux de la partie correspondante de l'unité, toutes choses étant égales par ailleurs en ce qui concerne les débits gazeux et liquide, les dimensions de colonnes, le nombre, l'espacement et la constitution des plateaux, la pression de fonctionnement, la composition du gaz à traiter et celle de la solution aqueuse.

On dispose donc de ce fait sur un atelier existant d'un moyen simple et économique d'améliorer les rendements en acide nitrique et de rendre les gaz résiduaires moins polluants.

Selon l'invention, le gaz à traiter provient de la combustion de l'ammoniac par l'air ou l'oxygène et contient de l'azote, de l'oxygène et des oxydes d'azote NO et $NO_2$, ces derniers en une quantité ne dépassant pas 6 000 vpm. La quantité d'oxygène présente dans le gaz n'est pas critique pourvu qu'elle soit supérieure à la valeur nécessaire pour l'oxydation de NO en $NO_2$ en phase gazeuse et l'oxydation de $HNO_2$ en $HNO_3$ en phase liquide $HNO_2 + 1/2\, O_2 \rightarrow HNO_3$.

Habituellement cette condition est satisfaite dans les colonnes d'oxydo-absorption et la teneur en oxygène des gaz exprimée en pression partielle est supérieure à 2 %, en général de l'ordre de 3,5 %. Bien entendu, une augmentation de cette pression partielle est favorable au rendement d'oxydo-absorption.

Le positionnement et le nombre de plateaux d'une installation d'oxydo-absorption constituée d'un ensemble de colonnes à plateaux qui sont modifiés selon la présente invention, de sorte qu'en régime permanent la hauteur de l'émulsion liquide y soit augmentée résultent des conditions décrites ci-dessus, à savoir que le gaz qui y est traité présente une teneur en $NO_x$ inférieure à 6 000 vpm. En conséquence,

cette modification se situe sur les derniers plateaux de l'installation. A titre d'exemple si l'installation d'oxydo-absorption comporte cinquante plateaux, la modification de l'invention porte sur tout ou partie des trente derniers plateaux, de préférence des vingt derniers. Les valeurs du rapport K définies ci-dessus, conformément à l'invention, pour un dispositif d'oxydo-absorption à contre-courant, déterminent dans le cas précis d'une colonne à plateaux des valeurs du rapport R qui a été défini ci-dessus, telles que R soit inférieur à 7, de préférence inférieur à 4,5.

La limite inférieure de la valeur de R n'est pas théoriquement critique mais il y a lieu d'éviter, en diminuant la valeur de R, l'apparition du phénomène de « pleurage » qui se produit lorsque tout ou partie du liquide sur le plateau s'écoule par les trous de ce plateau vers le plateau inférieur au lieu de passer par le déversoir. La valeur inférieure de R résulte donc de considérations pratiques propres à chaque type de colonne et de plateau et à leurs paramètres de fonctionnement.

La solution aqueuse utilisée est de l'eau ou bien de préférence une solution aqueuse diluée d'acide nitrique. Sa concentration en $HNO_3$ est habituellement inférieure à 8 N, de préférence inférieure à 5 N.

La température utilisée dans les colonnes d'oxydo-absorption est généralement comprise entre 0 °C et 40 °C et de préférence voisine de la température ambiante. La pression utilisée n'est pas critique. Une augmentation de la pression permet d'augmenter le rendement d'oxydo-absorption. Habituellement on opère entre 1 et 20 bars (1 à $20.10^5$ Pa) absolus, de préférence 1 à 12 bars absolus (1 à $12.10^5$ Pa).

La mise en œuvre du procédé de l'invention se réalise simplement sur des dispositifs à contre-courant connus dans la technique, tels que, par exemple, des colonnes à plateaux perforés, lesquels sont munis d'un tube déversoir de liquide vers le plateau inférieur et d'une cuvette où plonge le tube déversoir du liquide du plateau supérieur, le mouvement de la phase aqueuse étant descendant et celui du gaz ascendant, ou bien dans d'autres dispositifs à bon contact gaz-liquide. Sur les plateaux choisis comme il a été dit, le tube déversoir est prolongé vers le haut à une hauteur calculée pour la hauteur d'émulsion recherchée au-dessus des plateaux en fonction des paramètres de fonctionnement de la colonne (débit liquide, perte de charge à sec, etc...).

L'invention s'applique particulièrement bien à la diminution de la teneur en $NO_x$ d'un gaz d'atelier nitrique sur la dernière fraction des plateaux de l'installation d'oxydo-absorption, ce par quoi l'on obtient un gaz résiduaire d'une teneur réduite en $NO_x$ et une augmentation de l'efficacité de l'unité d'oxydo-absorption de l'acide nitrique.

L'invention sera mieux comprise en se référant à l'exemple comparatif et aux exemples suivants.

## Exemple comparatif

Sur un atelier d'acide nitrique, on dispose d'une unité d'oxydo-absorption recevant un gaz de combustion de l'ammoniac par l'air dont la capacité en $HNO_3$ est de 390 tonnes par jour. Elle comporte trois colonnes d'oxydo-absorption.

1ère colonne : 11 plateaux — Teneur en $NO_x$, gaz sortant 14 900 vpm
2ème colonne : 20 plateaux — Teneur en $NO_x$, gaz sortant 2 040 vpm
3ème colonne : 20 plateaux — Teneur en $NO_x$, gaz sortant 968 vpm

Les gaz sont admis dans l'unité sous un débit de 52 000 $Nm^3$/heure, pression des 4 bars absolus, température de 18 °C, diamètre de la colonne 5 m, pourcentage d'oxygène 3,5 % environ.

Dans les trois colonnes, la distance interplateaux est de 0,9 mètre et la hauteur d'émulsion gaz-liquide de 0,1 m, soit un rapport R de 9. Dans la troisième colonne la solution d'absorption est de l'eau introduite au sommet sous un débit de 5,7 $m^3$/heure.

## Exemples 1 à 3

On reprend la même unité dans les mêmes conditions de fonctionnement. La hauteur de l'émulsion gaz-liquide sur les vingt plateaux de la troisième colonne est portée respectivement à des valeurs telles que le rapport R soit de 4,5, 3 et 2,25 par modification de la hauteur des déversoirs. On mesure le taux de $NO_x$ (vpm) dans les gaz rejetés à l'atmosphère.

Les résultats sont réunis dans le tableau suivant.

| Exemple | Comparatif | 1 | 2 | 3 |
|---|---|---|---|---|
| Rapport R | 9 | 4,5 | 3 | 2,25 |
| Teneur en $NO_x$ des gaz à la sortie de la troisième colonne (vpm) | 968 | 635 | 472 | 376 |
| K (en heures) | $3,1 \cdot 10^{-4}$ | $6,2 \cdot 10^{-4}$ | $9,3 \cdot 10^{-4}$ | $12,4 \cdot 10^{-4}$ |

Du tableau précédent, il apparaît clairement que l'augmentation de la hauteur de l'émulsion gaz-liquide sur les derniers vingt plateaux de l'installation conformément à l'invention fournit une réduction notable de la teneur en $NO_x$ des gaz rejetés à l'atmosphère et partant, une augmentation de l'efficacité de l'atelier.

**Revendications**

1. Procédé de fabrication d'acide nitrique par oxydo-absorption, dans une solution aqueuse, des oxydes d'azote ($NO_x$) contenus dans un courant gazeux conjointement à l'oxygène, dans un dispositif de contact gaz-liquide à contre-courant, caractérisé en ce que l'on augmente le temps de séjour de la solution aqueuse dans la partie dudit dispositif pour laquelle la teneur en $NO_x$ du courant gazeux est inférieure à 6 000 vpm (volumes par millions), à une valeur telle que le rapport K du volume de rétention liquide en $m^3$ dans ladite partie du dispositif, au débit du courant gazeux en $Nm^3$/heure soit supérieur à $5.10^{-4}$ heure.

2. Procédé selon la revendication 1, caractérisé en ce que la teneur en $NO_x$ du courant gazeux est inférieure à 2 500 vpm et le rapport K supérieur à $3,5.10^{-4}$ heure.

3. Procédé selon l'une quelconque des revendications précédentes, dans lequel le dispositif d'oxydo-absorption est un ensemble de colonnes à plateaux, caractérisé en ce que l'on diminue le rapport R du volume de colonne compris entre deux plateaux successifs au volume occupé par l'émulsion gaz-liquide entre lesdits plateaux successifs, sur tout ou partie des plateaux pour lesquels la concentration en $NO_x$ du courant gazeux est inférieure à 6 000 vpm, de préférence inférieure à 2 500 vpm, à une valeur inférieure à 7.

4. Procédé selon la revendication 3, caractérisé en ce que la valeur du rapport R est inférieure à 4,5.

5. Procédé selon l'une quelconque des revendications précédentes, caractérisé en ce que la mise en contact a lieu à une température comprise entre 0 °C et 40 °C.

6. Procédé selon l'une quelconque des revendications précédentes, caractérisé en ce que la pression du courant gazeux est comprise entre 1 et $20.10^5$ Pa absolus.

7. Procédé selon l'une quelconque des revendications précédentes, caractérisé en ce que le courant gazeux contient de l'oxygène à une pression partielle d'au moins 2 %.

8. Procédé selon l'une quelconque des revendications précédentes, caractérisé en ce que la solution aqueuse d'oxydo-absorption est de l'eau ou une solution d'acide nitrique, à une concentration inférieure à 8 N.

9. Application du procédé selon l'une quelconque des revendications précédentes à l'élimination des $NO_x$ d'un effluent gazeux.

**Claims**

1. A process for producing nitric acid by oxido-absorption, in an aqueous solution, of nitrogen oxides ($NO_x$) which are contained in a gas flow together with oxygen, in a counter-flow gas-liquid contact apparatus, characterised in that the residence time of the aqueous solution in the part of said apparatus in which the $NO_x$ content of the gas flow is lower than 6 000 vpm (volumes per million), is increased to a value such that the ratio K of the liquid retention volume in $m^3$ in said part of the apparatus to the flow rate of the gas flow in $Nm^3$/hour is higher than $5.10^{-4}$ hour.

2. A process according to claim 1 characterised in that the $NO_x$ content of the gas glow is lower than 2 500 vpm and the ratio K is higher than $3.5.10^{-4}$ hour.

3. A process according to either one of the preceding claims wherein the oxido-absorption apparatus is an array of plate-type columns, characterised in that the ratio R of the volume of column between two successive plates to the volume occupied by the gas-liquid emulsion between said successive plates, in respect of all or some of the plates in respect of which the $NO_x$ concentration in the gas flow is lower than 6 000 vpm, preferably lower than 2 500 vpm, is reduced to a value of less than 7.

4. A process according to claim 3 characterised in that the value of the ratio R is lower than 4.5.

5. A process according to any one of the preceding claims characterised in that the contacting operation is effected at a temperature of between 0 °C and 40 °C.

6. A process according to any one of the preceding claims characterised in that the pressure of the gas flow is between 1 and $20.10^5$ Pa absolute.

7. A process according to any one of the preceding claims characterised in that the gas flow contains oxygen at a partial pressure of at least 2 %.

8. A process according to any one of the preceding claims characterised in that the aqueous oxido-absorption solution is water or a solution of nitric acid in a concentration of less than 8 N.

9. Use of the process according to any one of the preceding claims for removing $NO_x$ from a gaseous effluent.

**Ansprüche**

1. Verfahren zur Herstellung von Salpetersäure durch Oxidation-Absorption von Stickoxiden ($NO_x$), die in einem Gasstrom zusammen mit Sauerstoff enthalten sind, in einer wässrigen Lösung, in einer Vorrichtung für Gas-flüssig Kontakt im Gegenstrom, dadurch gekennzeichnet, daß man die Verweilzeit der wässrigen Lösung in dem Bereich der Vorrichtung in den der Gehalt an $NO_x$ des Gasstroms unter 6 000 vpm (Volumina je Millionen) liegt, auf einen solchen Wert erhöht, daß das Verhältnis K des Volumens der zurückgehaltenen Flüssigkeit in $m^3$ in diesem Bereich der Vorrichtung zu Durchsatz des Gasstroms in $Nm^3/h$ größer ist als $5.10^{-4}$ h.

2. Verfahren nach Anspruch 1 dadurch gekennzeichnet, daß der Gehalt an $NO_x$ des Gasstroms unter 2 500 vpm liegt und das Verhältnis K größer ist als $3{,}5.10^{-4}$ h.

3. Verfahren nach einem der vorangegangenen Ansprüche, bei dem die Vorrichtung für die Oxidation-Absorption ein Satz aus Bödenkolonnen ist, dadurch gekennzeichnet, daß man das Verhältnis R von Volumen der Kolonne zwischen zwei aufeinanderfolgenden Böden zu Volumen, das von der Gas-flüssig Emulsion zwischen den beiden aufeinanderfolgenden Böden eingenommen wird, auf den gesamten oder einen Teil der Böden, für die die Konzentration $NO_x$ des Gasstroms unter 6 000 vpm liegt, vorzugsweise unter 2 500 vpm, auf einen Wert unter 7 verringert.

4. Verfahren nach Anspruch 3 dadurch gekennzeichnet, daß der Wert des Verhältnisses R unter 4,5 liegt.

5. Verfahren nach einem der vorangehenden Ansprüche dadurch gekennzeichnet, daß das in Kontakt bringen bei einer Temperatur zwischen 0 und 40 °C stattfindet.

6. Verfahren nach einem der vorangehenden Ansprüche dadurch gekennzeichnet, daß der Druck des Gasstroms zwischen 1 und $20.10^5$ Pa absolut liegt.

7. Verfahren nach einem der vorangehenden Ansprüche dadurch gekennzeichnet, daß der Gasstrom Sauerstoff mit einem Partialdruck von mindestens 2 % enthält.

8. Verfahren nach einem der vorangehenden Ansprüche dadurch gekennzeichnet, daß die wässrige Oxidation-Absorptionslösung Wasser oder eine Salpetersäurelösung mit einer Konzentration $< 8$n ist.

9. Anwendung des Verfahrens nach einem der vorangehenden Ansprüche zum Abtrennen der Stickoxide aus einem Abgasstrom.